# EUROPEAN PATENT APPLICATION

(11) **EP 4 365 510 A1**
(43) Date of publication of application: **08.05.2024**
(21) Application number: 22832741.7
(22) Date of filing: 07.06.2022
(51) Int. Cl.: F25B 29/00, F24F 11/84, F24F 1/32, F24F 7/08, F25B 41/26

(54) **AIR CONDITIONING SYSTEM**

(30) Priority: 01.07.2021 JP 2021110086
(71) Applicant: DAIKIN INDUSTRIES, LTD., Osaka-Shi, Osaka 530-0001 (JP)
(72) Inventor: FUKUYAMA, Yuta, Osaka-shi, Osaka 530-0001 (JP); MATSUOKA, Shinya, Osaka-shi, Osaka 530-0001 (JP); NAKANISHI, Takaya, Osaka-shi, Osaka 530-0001 (JP)
(74) Representative: Hoffmann Eitle
(86) International application number: PCT/JP2022/022987
(87) International publication number: WO 2023/276584

(57) **Abstract**

An air conditioning system 100 includes an outdoor unit 110 having a heat source refrigerant circuit RC1, a plurality of indoor units 120 each having an indoor heat exchanger 52, a switching unit 70 having an intermediate refrigerant circuit RC3, and a first heat recovery unit 130 having a first auxiliary refrigerant circuit RC2 including a supply air auxiliary heat exchanger 131 and an exhaust air auxiliary heat exchanger 132, in which the heat source refrigerant circuit RC1 and the intermediate refrigerant circuit RC3 are connected by a first connection pipe 11 having a flow of a liquid refrigerant, a second connection pipe 12 having a flow of a high-pressure gas refrigerant, and a third connection pipe 13 having a flow of a low-pressure gas refrigerant, and the heat source refrigerant circuit RC1 and the first auxiliary refrigerant circuit RC2 are connected by the second connection pipe 12 and the third connection pipe 13 via an auxiliary heat exchanger switching valve 133.

## Description

### TECHNICAL FIELD

The present disclosure relates to an air conditioning system.

### BACKGROUND ART

There has been conventionally known an air conditioning system that includes a heat source unit, a plurality of utilization units, a supply air unit having an auxiliary heat exchanger, and an exhaust air unit having an auxiliary heat exchanger, the respective units being connected by pipes, and the air conditioning system (a so-called freely cooling and heating system) allows simultaneous use of the utilization unit executing cooling operation and the utilization unit executing heating operation (see PATENT LITERATURE 1 or the like). The air conditioning system according to PATENT LITERATURE 1 utilizes one of the auxiliary heat exchangers as an evaporator and another one of the auxiliary heat exchangers as a condenser, and recovers heat from supply air and exhaust air with use of the auxiliary heat exchangers.

### CITATION LIST

### [PATENT LITERATURE]

PATENT LITERATURE 1: Japanese Laid-Open Patent Publication No. 3-20573

### SUMMARY OF THE INVENTION

### [TECHNICAL PROBLEM]

The conventional air conditioning system includes a large number of switching valves in order to control refrigerant flows to the auxiliary heat exchangers. The air conditioning system thus problematically has increase in cost for the switching valves, and complicated connecting work for the heat source unit and the utilization units via the switching valves.

It is an object of the present disclosure to reduce the number of switching valves and suppress the number of work processes necessary for connection between a refrigerant pipe and the switching valves in an air conditioning system including an auxiliary heat exchanger for heat recovery.

### [SOLUTION TO PROBLEM]

(1) An air conditioning system includes: a first unit having a first refrigerant circuit including a compressor and a first heat exchanger; a second unit disposed in a first space and including a second heat exchanger; a third unit including a third heat exchanger; an intermediate unit having an intermediate refrigerant circuit configured to cause the second heat exchanger and the third heat exchanger to individually function as an evaporator or a condenser; a first auxiliary refrigerant circuit including a first auxiliary heat exchanger and a second auxiliary heat exchanger connected in series to the first auxiliary heat exchanger via a refrigerant pipe; and a first heat recovery unit including a first supply fan configured to supply the first space with outdoor air having passed the first auxiliary heat exchanger, a first exhaust fan configured to discharge, to outside, air in the first space that having passed the second auxiliary heat exchanger, and a first switching valve configured to switch a refrigerant flow in the first auxiliary refrigerant circuit; in which the first refrigerant circuit and the intermediate refrigerant circuit are connected by a first connection pipe having a flow of a liquid refrigerant, a second connection pipe having a flow of a high-pressure gas refrigerant, and a third connection pipe having a low-pressure gas refrigerant, and the first refrigerant circuit and the first auxiliary refrigerant circuit are connected by the second connection pipe and the third connection pipe via the first switching valve.
   The configuration described above achieves connection between the first unit and the first heat recovery unit by the second connection pipe and the third connection pipe via the first switching valve. Accordingly, the air conditioning system, which includes the first heat recovery unit having the first auxiliary heat exchanger and the second auxiliary heat exchanger, can be reduced in the number of the switching valves and can be suppressed in the number of work processes necessary for connection between the first refrigerant circuit and the first auxiliary refrigerant circuit.
(2) Preferably, the air conditioning system further includes: a casing accommodating the first auxiliary refrigerant circuit, the first supply fan, and the first exhaust fan, and provided with a supply air passage for air passing the first auxiliary heat exchanger, and an exhaust air passage for air passing the second auxiliary heat exchanger; and a heat exchange unit configured to cause heat exchange between the air in the supply air passage before passing the first auxiliary heat exchanger and the air in the exhaust air passage before passing the second auxiliary heat exchanger.
   In this configuration, the single casing accommodates the first heat recovery unit including the heat exchange unit, to simplify a pipe configuration around the first heat recovery unit. This further facilitates connecting work for the first refrigerant circuit and the first auxiliary refrigerant circuit.
(3) Preferably, the first heat recovery unit includes a casing, and the casing accommodates the first auxiliary refrigerant circuit and the first switching valve.
   In this configuration, the single casing accommodates the first heat recovery unit, to simplify the pipe configuration around the first heat recovery unit. This further facilitates connecting work for the first refrigerant circuit and the first auxiliary refrigerant circuit.
(4) Preferably, the refrigerant is a combustible refrigerant, and the air conditioning system further includes shutoff valves provided between the first switching valve and the second connection pipe, and between the first switching valve and the third connection pipe.
   This configuration suppresses quantity of the combustible refrigerant leaking from the first heat recovery unit.
(5) Preferably, the third unit is disposed in a second space different from the first space, the air conditioning system further includes a second heat recovery unit having a second auxiliary refrigerant circuit including a third auxiliary heat exchanger and a fourth auxiliary heat exchanger connected in series to the third auxiliary heat exchanger via a refrigerant pipe, a second supply fan configured to supply the second space with outdoor air having passed the third auxiliary heat exchanger, a second exhaust fan configured to discharge, to outside, air in the second space that having passed the fourth auxiliary heat exchanger, and a second switching valve configured to switch a refrigerant flow in the second auxiliary refrigerant circuit; and the first refrigerant circuit and the second auxiliary refrigerant circuit are connected by the second connection pipe and the third connection pipe via the second switching valve.

This configuration, which includes the plurality of heat recovery units each having the auxiliary heat exchanger for heat recovery, can be reduced in the number of the switching valves and can be suppressed in the number of work processes necessary for connection between the first refrigerant circuit and each of the auxiliary refrigerant circuits.

### BRIEF DESCRIPTION OF DRAWINGS

FIG. 1 is a schematic configuration diagram of an air conditioning system according to a first embodiment of the present disclosure.
FIG. 2 is a refrigerant circuit diagram of the air conditioning system according to the first embodiment.
FIG. 3 is a schematic configuration diagram of an outdoor air treating unit.
FIG. 4 is a perspective view of a heat exchange unit.
FIG. 5 is a schematic explanatory sectional view taken along line X-X indicated in FIG. 3.
FIG. 6 is a schematic explanatory sectional view taken along line Y-Y indicated in FIG. 3.
FIG. 7 is a control block diagram of the air conditioning system according to the first embodiment.
FIG. 8 is a schematic configuration diagram of an air conditioning system according to a second embodiment of the present disclosure.
FIG. 9 is a refrigerant circuit diagram of the air conditioning system according to the second embodiment.
FIG. 10 is a control block diagram of the air conditioning system according to the second embodiment.

### DETAILED DESCRIPTION

An air conditioning system according to the present disclosure will be described in detail hereinafter with reference to the accompanying drawings. The present disclosure should not be limited to the following exemplifications, but is intended to include any modification recited in claims within meanings and a scope equivalent to those of the claims.

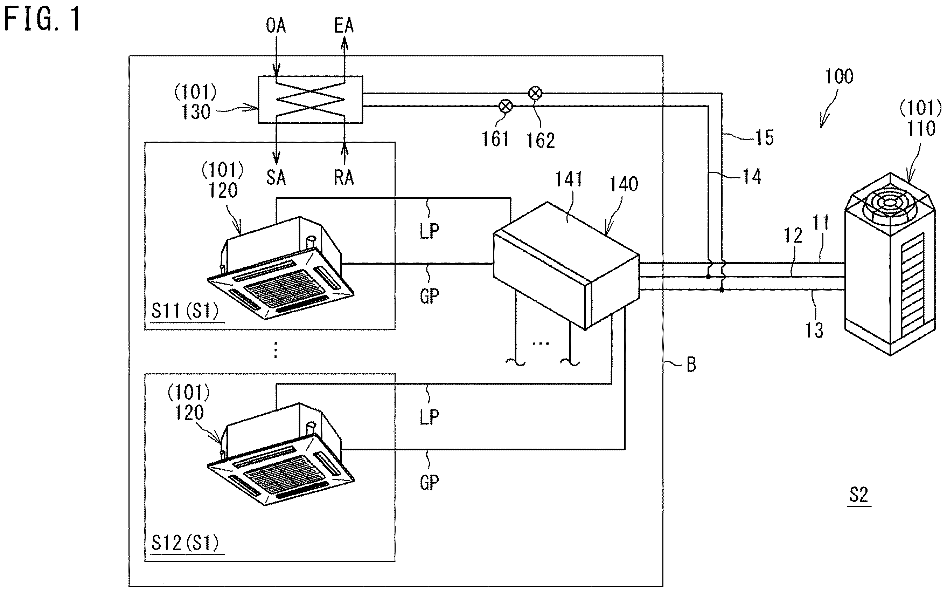

FIG. 1 is a schematic diagram depicting an entire configuration of an air conditioning system according to a first embodiment of the present disclosure. An air conditioning system 100 according to the first embodiment of the present disclosure is installed in a building, a plant, or the like and achieves air conditioning in an air conditioning target space. The air conditioning system 100 includes an air conditioner 101 and a refrigerant flow path switching device 140. The air conditioner 101 is configured to execute vapor-compression refrigeration cycle operation to cool or heat the air conditioning target space. The air conditioner 101 according to the present embodiment adopts R32 as a refrigerant. Note that R32 is a refrigerant having slight combustibility. The air conditioner according to the present disclosure may alternatively adopt a refrigerant other than R32.

The air conditioning system 100 is designed to perform air-conditioning of an indoor space S1 provided in a building B. The building B is provided therein with a plurality of indoor spaces S1. The following description refers to a first indoor space S1 as a first space S11, a second indoor space S1 different from the first space S11 as a second space S12, and a space outside the building B as an outdoor space S2. The outdoor space S2 according to the present disclosure is an open air space.

The air conditioner 101 includes an outdoor unit 110 as a heat source unit, an indoor unit 120 as a utilization unit, and a first heat recovery unit 130. In the air conditioner 101, two or more indoor units 120 and a single first heat recovery unit 130 are connected to the single outdoor unit 110. The indoor units 120 are each connected to the outdoor unit 110 via the refrigerant flow path switching device 140. In the air conditioner 101, the refrigerant flow path switching device 140 is configured to freely select cooling operation or heating operation for each of the indoor units 120 to achieve air conditioning of the target space.

In the air conditioning system 100, the indoor unit 120 provided for the first space S11 is configured to condition air in the first space S11, and the first heat recovery unit 130 is configured to ventilate the first space S11. In the air conditioning system 100, the indoor unit 120 provided for the second space S12 is configured to condition air in the second space S12. The outdoor unit 110 is installed in the outdoor space S2. The first heat recovery unit 130 is disposed outside the indoor space S1 in the building B.

### [Configuration of outdoor unit]

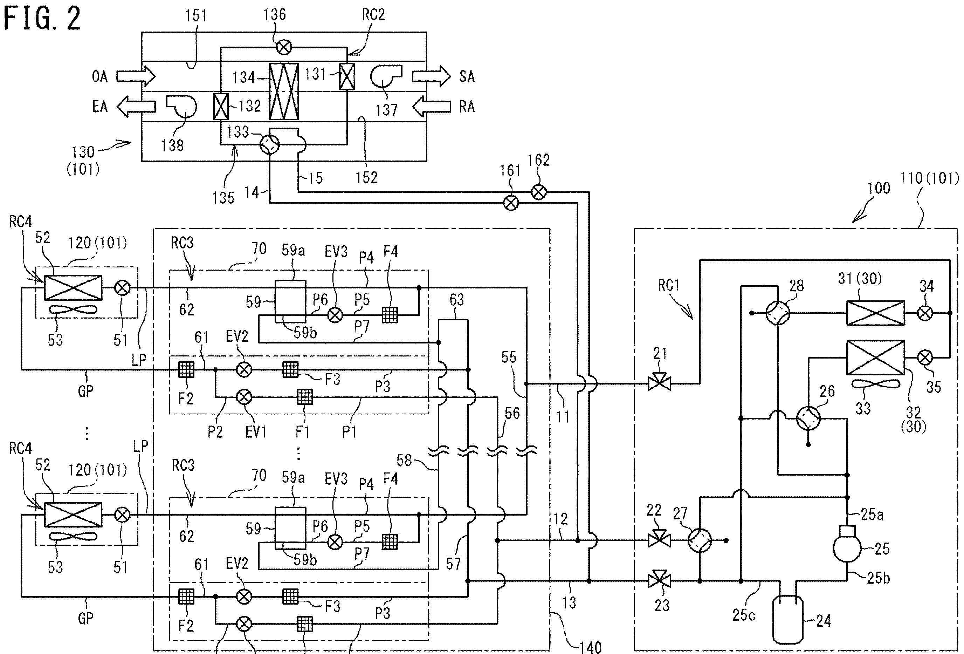

FIG. 2 is a refrigerant circuit diagram of the air conditioning system 100. As depicted in FIG. 1, the outdoor unit 110 is installed in the outdoor space S2 such as on a roof or a balcony or underground of the building B. As depicted in FIG. 2, the outdoor unit 110 is provided therein with various constituents that are connected via refrigerant pipes to constitute a heat source refrigerant circuit RC1. The heat source refrigerant circuit RC1 is connected to a first auxiliary refrigerant circuit RC2 in the first heat recovery unit 130 and an intermediate refrigerant circuit RC3 in the refrigerant flow path switching device 140 via a first connection pipe 11, a second connection pipe 12, and a third connection pipe 13.

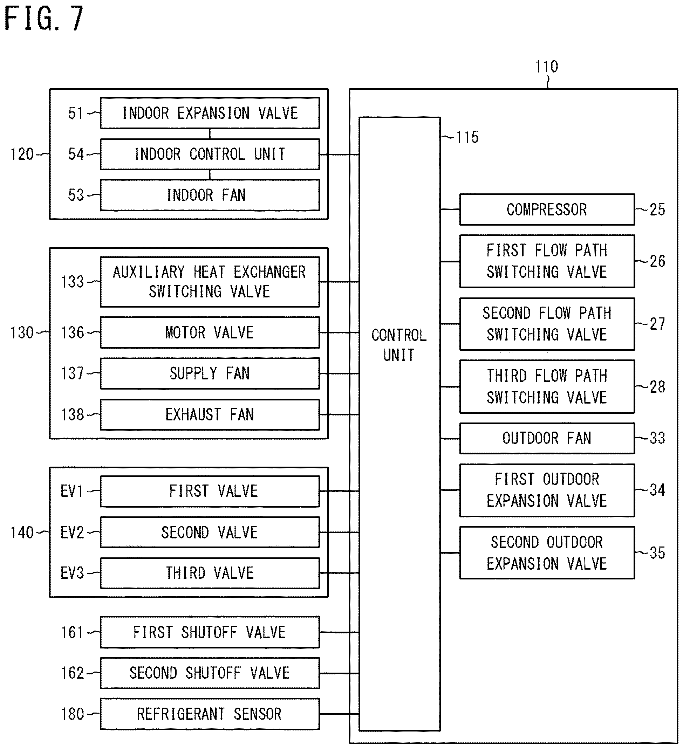

As depicted in FIG. 2, the heat source refrigerant circuit RC1 includes a liquid-side shutoff valve 21, a gas-side first shutoff valve 22, a gas-side second shutoff valve 23, an accumulator 24, a compressor 25, a first flow path switching valve 26, a second flow path switching valve 27, a third flow path switching valve 28, an outdoor heat exchanger 30, a first outdoor expansion valve 34, and a second outdoor expansion valve 35. The heat source refrigerant circuit RC1 is constituted by these constituents connected via a plurality of refrigerant pipes. The outdoor unit 110 is provided therein with an outdoor fan 33, a control unit 115 (see FIG. 7), and the like.

The liquid-side shutoff valve 21, the gas-side first shutoff valve 22, and the gas-side second shutoff valve 23 are manually opened and closed upon refrigerant filling, pump down, and the like. The liquid-side shutoff valve 21 has a first end connected to the first connection pipe 11. The liquid-side shutoff valve 21 has a second end connected to a refrigerant pipe extending to the first outdoor expansion valve 34 and the second outdoor expansion valve 35. The gas-side first shutoff valve 22 has a first end connected to the second connection pipe 12. The gas-side first shutoff valve 22 has a second end connected to a refrigerant pipe extending to the second flow path switching valve 27. The gas-side second shutoff valve 23 has a first end connected to the third connection pipe 13. The gas-side second shutoff valve 23 has a second end connected to a refrigerant pipe 25c extending to the accumulator 24.

The accumulator 24 is a container temporarily storing a low-pressure refrigerant to be sucked into the compressor 25 and used for separation between a gas refrigerant and a liquid refrigerant.

The compressor 25 has a hermetic structure incorporating a compressor motor, and is of a positive displacement type such as a scroll type or a rotary type. The compressor 25 compresses a low-pressure refrigerant sucked from a suction pipe 25b and then discharges the compressed refrigerant from a discharge pipe 25a. The compressor 25 contains refrigerating machine oil. This refrigerating machine oil occasionally circulates in a refrigerant circuit along with the refrigerant. The outdoor unit 110 according to the present embodiment includes a single compressor 25. The outdoor unit 110 may alternatively include two or more compressors 25 connected in parallel.

The first flow path switching valve 26, the second flow path switching valve 27, and the third flow path switching valve 28 are four-way switching valves. Each of the first flow path switching valve 26, the second flow path switching valve 27, and the third flow path switching valve 28 switches a refrigerant flow in accordance with an operation situation of the air conditioner 101. Each of the first flow path switching valve 26, the second flow path switching valve 27, and the third flow path switching valve 28 has a refrigerant inflow port connected with the discharge pipe 25a or a branching pipe extending from the discharge pipe 25a. Each of the first flow path switching valve 26, the second flow path switching valve 27, and the third flow path switching valve 28 has a refrigerant inflow port connected with a branching pipe extending from the refrigerant pipe 25c connecting the gas-side second shutoff valve 23 and the accumulator 24. Each of the first flow path switching valve 26, the second flow path switching valve 27, and the third flow path switching valve 28 is configured to shut off a refrigerant flow in a refrigerant flow path during operation, and actually functions as a three-way valve.

The outdoor heat exchanger 30 is of a cross-fin type or a microchannel type. The outdoor heat exchanger 30 includes a first heat exchange unit 31 and a second heat exchange unit 32. The first heat exchange unit 31 is provided in an upper portion of the outdoor heat exchanger 30, and the second heat exchange unit 32 is provided below the first heat exchange unit 31.

The first heat exchange unit 31 has a gas side end connected to a refrigerant pipe extending to the third flow path switching valve 28. The first heat exchange unit 31 has a liquid side end connected to a refrigerant pipe extending to the first outdoor expansion valve 34.

The second heat exchange unit 32 has a gas side end connected to a refrigerant pipe extending to the first flow path switching valve 26. The second heat exchange unit 32 has a liquid side end connected to a refrigerant pipe extending to the second outdoor expansion valve 35.

The refrigerant passing the first heat exchange unit 31 and the second heat exchange unit 32 exchanges heat with an air flow generated by the outdoor fan 33. The outdoor fan 33 is a propeller fan or the like, and is driven by an outdoor fan motor (not depicted). The outdoor fan 33 generates an air flow entering the outdoor unit 110, passing the outdoor heat exchanger 30, and flowing out of the outdoor unit 110.

Examples of the first outdoor expansion valve 34 and the second outdoor expansion valve 35 include a motor valve having an adjustable opening degree. The first outdoor expansion valve 34 has a first end connected to a refrigerant pipe extending from the first heat exchange unit 31. The first outdoor expansion valve 34 has a second end connected to a refrigerant pipe extending to the liquid-side shutoff valve 21.

The second outdoor expansion valve 35 has a first end connected to a refrigerant pipe extending from the second heat exchange unit 32. The second outdoor expansion valve 35 has a second end connected to a refrigerant pipe extending to the liquid-side shutoff valve 21. Each of the first outdoor expansion valve 34 and the second outdoor expansion valve 35 has an opening degree adjusted in accordance with an operation situation, and decompresses the refrigerant passing the corresponding outdoor expansion valve in accordance with the opening degree.

The compressor 25, the outdoor fan 33, the first outdoor expansion valve 34, the second outdoor expansion valve 35, the first flow path switching valve 26, the second flow path switching valve 27, and the third flow path switching valve 28 are operation controlled by the control unit 115 (see FIG. 7). The control unit 115 in the outdoor unit 110 transmits and receives signals to and from an indoor control unit 54 (see FIG. 7) in each of the indoor units 120 and a control unit (not depicted) in the refrigerant flow path switching device 140 via communication lines.

### [Configuration of indoor units]

Each of the indoor units 120 is of a ceiling embedded type, a ceiling pendant type, a floor-standing type, or a wall mounted type. The air conditioning system 100 according to the present embodiment includes the two or more indoor units 120.

Each of the indoor units 120 is provided therein with a utilization refrigerant circuit RC4. The utilization refrigerant circuit RC4 includes an indoor expansion valve 51 and an indoor heat exchanger 52. The utilization refrigerant circuit RC4 is constituted by the indoor expansion valve 51 and the indoor heat exchanger 52 connected via a refrigerant pipe.

The indoor unit 120 is provided with an indoor fan 53 and the indoor control unit 54 (see FIG. 7). The indoor expansion valve 51 is a motor valve having an adjustable opening degree. The indoor expansion valve 51 has a first end connected to a liquid tube LP. The indoor expansion valve 51 has a second end connected to a refrigerant pipe extending to the indoor heat exchanger 52. The indoor expansion valve 51 decompresses the refrigerant passing therethrough in accordance with the opening degree.

The indoor heat exchanger 52 is of a cross-fin type, a microchannel type, or the like. The indoor heat exchanger 52 has a liquid side end connected to a refrigerant pipe extending from the indoor expansion valve 51. The indoor heat exchanger 52 has a gas side end connected to a gas tube GP. The refrigerant having entered the indoor heat exchanger 52 exchanges heat with an air flow generated by the indoor fan 53 and is exhausted from the indoor heat exchanger 52.

Examples of the indoor fan 53 include a cross-flow fan and a sirocco fan. The indoor fan 53 is driven by an indoor fan motor (not depicted). The indoor fan 53 generates an air flow entering the indoor unit 120 from the indoor space S1, passing the indoor heat exchanger 52, and then flowing out to the indoor space S1.

The indoor expansion valve 51 and the indoor fan 53 are operation controlled by the indoor control unit 54 (see FIG. 7) in the indoor unit 120. The indoor control unit 54 is connected with the control unit 115 of the outdoor unit 110 and a remote controller (not depicted). The indoor control unit 54 drives the indoor fan 53 and the indoor expansion valve 51 in accordance with operating conditions such as set temperature inputted to the remote controller.

### [Configuration of refrigerant flow path switching device]

As depicted in FIG. 1 and FIG. 2, the refrigerant flow path switching device 140 is provided between the outdoor unit 110 and the plurality of indoor units 120. The refrigerant flow path switching device 140 includes a casing 141. The refrigerant flow path switching device 140 switches flows of the refrigerant entering the outdoor unit 110 and the indoor units 120. As depicted in FIG. 2, the casing 141 accommodates a plurality of header pipes 55, 56, 57, and 58 and a plurality of switching units 70.

### (Header pipes)

As depicted in FIG. 2, the plurality of header pipes 55, 56, 57, and 58 includes a first header pipe 55, a second header pipe 56, a third header pipe 57, and a fourth header pipe 58. The first header pipe 55 is connected to the first connection pipe 11. The second header pipe 56 is connected to the second connection pipe 12. The third header pipe 57 is connected to the third connection pipe 13.

### (Switching units)

The refrigerant flow path switching device 140 includes the plurality of switching units 70. The switching units 70 constitute the intermediate refrigerant circuit RC3 of the refrigerant flow path switching device 140. Each of the switching units 70 is connected with a single indoor unit 120. All the switching units 70 of the refrigerant flow path switching device 140 are not necessarily connected with the indoor units 120, and the refrigerant flow path switching device 140 may include a switching unit 70 not connected to any indoor unit 120.

### (Regarding intermediate refrigerant circuit)

The plurality of switching units 70 is configured identically, and the intermediate refrigerant circuit RC3 in each of the switching units 70 includes a plurality of valves EV1, EV2, and EV3, and a plurality of refrigerant pipes.

The plurality of valves EV1, EV2, and EV3 in each of the switching units 70 includes a first valve EV1, a second valve EV2, and a third valve EV3. These valves EV1, EV2, and EV3 are each constituted by a motor valve having an adjustable opening degree. Each of the second valve EV2 and the third valve EV3 is operation controlled by a control unit (not depicted) so as to come into a fully closed state, a fully opened state, or an opening degree adjusted state. The first valve EV1 is operation controlled by a control unit (not depicted) so as to come into a minimum opening degree state, the fully opened state, the fully closed state, or the opening degree adjusted state.

The switching units 70 each include a first refrigerant tube P1 connecting the second header pipe 56 and the first valve EV1. The first refrigerant tube P1 has a halfway portion provided with a filter F1. The switching unit 70 includes a second refrigerant tube P2. The second refrigerant tube P2 has a first end connected to the first valve EV1. The switching unit 70 includes a utilization gas pipe 61. The utilization gas pipe 61 has a first end connected to the gas tube GP of the indoor unit 120. The utilization gas pipe 61 has a second end connected to the second valve EV2. The second refrigerant tube P2 has a second end connected to the utilization gas pipe 61. The utilization gas pipe 61 is provided with a filter F2.

The switching unit 70 includes a third refrigerant tube P3. The third refrigerant tube P3 has a first end connected to the second valve EV2. The third refrigerant tube P3 has a second end connected to the third header pipe 57. The third refrigerant tube P3 has a halfway portion provided with a filter F3.

The switching unit 70 includes a utilization liquid pipe 62. The utilization liquid pipe 62 has a first end connected to the liquid tube LP of the indoor unit 120. The utilization liquid pipe 62 has a second end connected to a subcooling heat exchanger 59. The subcooling heat exchanger 59 is provided therein with a first heat transfer tube 59a and a second heat transfer tube 59b. The subcooling heat exchanger 59 causes heat exchange between the refrigerant flowing in the first heat transfer tube 59a and the refrigerant flowing in the second heat transfer tube 59b. The utilization liquid pipe 62 has a second end connected to a first end of the first heat transfer tube 59a.

The switching unit 70 includes a fourth refrigerant tube P4. The fourth refrigerant tube P4 has a first end connected to a second end of the first heat transfer tube 59a. The fourth refrigerant tube P4 has a second end connected to the first header pipe 55.

The switching unit 70 includes a fifth refrigerant tube P5 branching from a halfway portion of the fourth refrigerant tube P4. The fifth refrigerant tube P5 has a first end connected to a first end of the third valve EV3. The fifth refrigerant tube P5 has a halfway portion provided with a filter F4.

The switching unit 70 includes a sixth refrigerant tube P6 and a seventh refrigerant tube P7. The sixth refrigerant tube P6 has a first end connected to the third valve EV3. The sixth refrigerant tube P6 has a second end connected to a first end of the second heat transfer tube 59b of the subcooling heat exchanger 59. The seventh refrigerant tube P7 has a first end connected to the second heat transfer tube 59b of the subcooling heat exchanger 59. The seventh refrigerant tube P7 has a second end connected to the fourth header pipe 58. The fourth header pipe 58 is connected to the third header pipe 57 via a connecting tube 63.

The fourth header pipe 58 receives the refrigerant flowing from the first header pipe 55 via the fourth refrigerant tube P4, the fifth refrigerant tube P5, the third valve EV3, the sixth refrigerant tube P6, the subcooling heat exchanger 59, and the seventh refrigerant tube P7. The refrigerant having entered the fourth header pipe 58 passes the connecting tube 63 and flows into the third header pipe 57.

### [Configuration of first heat recovery unit]

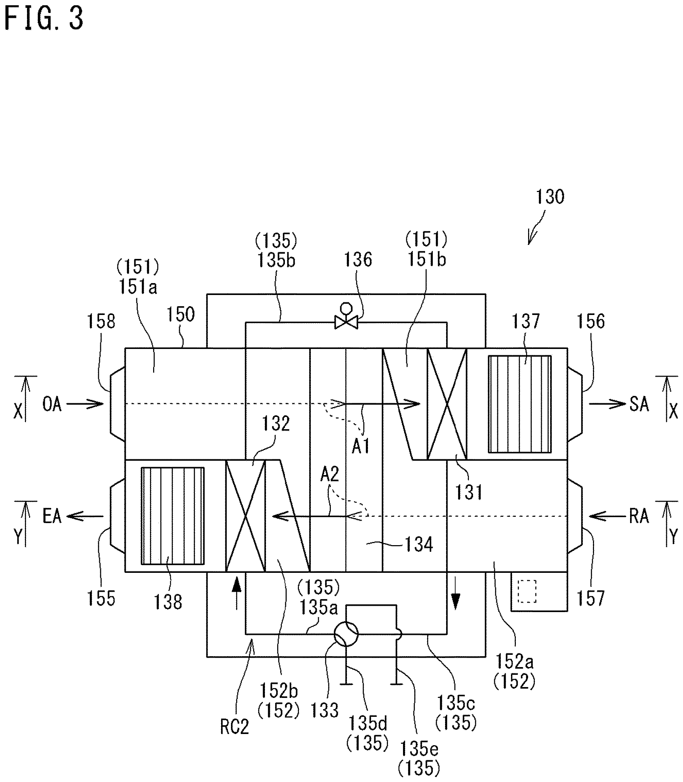

The first heat recovery unit 130 is configured to supply the indoor space S1 with cooled or heated air (outdoor air) and ventilate the indoor space S1 while recovering heat from air (exhaust air) exhausted from the indoor space S1, and is also referred to as an outdoor air treating unit. The first heat recovery unit 130 is disposed outside the indoor space S1 in the building B. The first heat recovery unit 130 is disposed in a ceiling space above the indoor space S1, and is connected to the indoor space S1 and the outdoor space S2 via ducts. The present embodiment exemplifies the case where the first heat recovery unit 130 is disposed in the ceiling space above the indoor space S1. Alternatively, the first heat recovery unit according to the present disclosure may be of the ceiling pendant type, the ceiling embedded type, the floor-standing type, or the wall mounted type, and may be disposed at a position other than the ceiling space. As depicted in FIG. 2 and FIG. 3, the first heat recovery unit 130 includes a supply air auxiliary heat exchanger 131, an exhaust air auxiliary heat exchanger 132, an auxiliary heat exchanger switching valve 133, and a heat exchange unit 134. The first heat recovery unit 130 is provided therein with the first auxiliary refrigerant circuit RC2. The first auxiliary refrigerant circuit RC2 is constituted by the supply air auxiliary heat exchanger 131, the exhaust air auxiliary heat exchanger 132, and the auxiliary heat exchanger switching valve 133 connected by an auxiliary refrigerant pipe 135. The auxiliary refrigerant pipe 135 includes a first auxiliary refrigerant tube 135a, a second auxiliary refrigerant tube 135b, a third auxiliary refrigerant tube 135c, a fourth auxiliary refrigerant tube 135d, and a fifth auxiliary refrigerant tube 135e.

Each of the supply air auxiliary heat exchanger 131 and the exhaust air auxiliary heat exchanger 132 is of the cross-fin type, the microchannel type, or the like. The supply air auxiliary heat exchanger 131 has a first side end connected to the third auxiliary refrigerant tube 135c extending from the auxiliary heat exchanger switching valve 133. The supply air auxiliary heat exchanger 131 has a second side end connected to a first end of the second auxiliary refrigerant tube 135b. The second auxiliary refrigerant tube 135b has a second end connected to a first side end of the exhaust air auxiliary heat exchanger 132. The second auxiliary refrigerant tube 135b has a halfway portion provided with a motor valve 136. The motor valve 136 has an adjustable opening degree. The exhaust air auxiliary heat exchanger 132 has a second side end connected to the first auxiliary refrigerant tube 135a extending from the auxiliary heat exchanger switching valve 133.

The auxiliary heat exchanger switching valve 133 is a four-way switching valve having four ports connected respectively with the first auxiliary refrigerant tube 135a, the second auxiliary refrigerant tube 135b, the fourth auxiliary refrigerant tube 135d, and the fifth auxiliary refrigerant tube 135e. The fourth auxiliary refrigerant tube 135d is connected to a first branching pipe 14, and the fifth auxiliary refrigerant tube 135e is connected to a second branching pipe 15. The auxiliary heat exchanger switching valve 133 switches refrigerant flows among the first auxiliary refrigerant tube 135a, the second auxiliary refrigerant tube 135b, the fourth auxiliary refrigerant tube 135d, and the fifth auxiliary refrigerant tube 135e.

The first auxiliary refrigerant circuit RC2 is connected to the second connection pipe 12 via the first branching pipe 14, and is connected to the third connection pipe 13 via the second branching pipe 15. In other words, the first auxiliary refrigerant circuit RC2 in the first heat recovery unit 130 is connected to the heat source refrigerant circuit RC1 in the outdoor unit 110 not via the refrigerant flow path switching device 140.

### (Supply fan and exhaust fan)

The first heat recovery unit 130 is provided therein with the supply fan 137 and the exhaust fan 138. Examples of the supply fan 137 and the exhaust fan 138 include a sirocco fan. The supply fan 137 is driven by a supply fan motor (not depicted). The supply fan 137 generates an air flow entering the first heat recovery unit 130 from the outdoor space S2 (see FIG. 1), passing the supply air auxiliary heat exchanger 131, and then flowing out to the indoor space S1 (see FIG. 1). The exhaust fan 138 is driven by an exhaust fan motor (not depicted). The exhaust fan 138 generates an air flow entering the first heat recovery unit 130 from the indoor space S1 (see FIG. 1), passing the exhaust air auxiliary heat exchanger 132, and then flowing out to the outdoor space S2 (see FIG. 1).

### (Configurations of supply air passage and exhaust air passage)

FIG. 3 depicts a return air intake port 157 provided to import air (return air RA) from the indoor space S1 (see FIG. 1) into a casing 150. The return air intake port 157 is connected to the indoor space S1 via a duct or the like (not depicted). There is provided an exhaust air blow-out port 155 to exhaust, as exhaust air EA, the return air RA imported into the casing 150, to the outdoor space S2 (see FIG. 1). The exhaust air blow-out port 155 is connected to the outdoor space S2 via a duct or the like (not depicted). There is provided an outdoor air intake port 158 to import air (outdoor air OA) from the outdoor space S2 into the casing 150. The outdoor air intake port 158 is connected to the outdoor space S2 via a duct or the like (not depicted). There is provided a supply air blow-out port 156 to supply the indoor space S1 with the outdoor air OA imported into the casing 150 as supply air SA. The supply air blow-out port 156 is connected to the indoor space S1 via a duct or the like (not depicted).

### (Heat exchange unit)

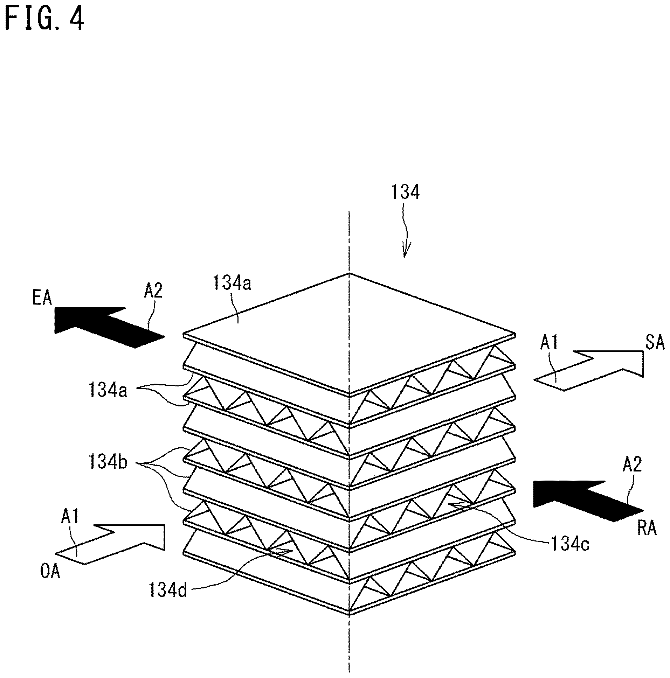

FIG. 4 is a perspective view of a heat exchange unit. FIG. 4 depicts a heat exchange unit 134 according to the present embodiment, as a perpendicular total heat exchanger configured to have a first air flow A1 and a second air flow A2 running substantially perpendicularly to each other. The heat exchange unit 134 includes partition plates 134a and partition wall plates 134b. The partition plates 134a and the partition wall plates 134b are alternately stacked with use of an appropriate adhesive. The heat exchange unit 134 entirely has a substantially quadrangular prism shape.

Each of the partition plates 134a has a heat transfer property and moisture permeability, and is formed into a flat plate shape. Each of the partition wall plates 134b is formed into a corrugated plate shape continuously having substantially triangular sections. Each of the partition wall plates 134b forms an air passage between two of the partition plates 134a adjacent to each other. The partition wall plates 134b are stacked so as to be turned by 90 degrees one by one in a stacking direction (a vertical direction in FIG. 4) of the partition plates 134a and the partition wall plates 134b. There are thus provided a supply air passage 134d for the first air flow A1 and an exhaust air passage 134c for the second air flow A2. The supply air passage 134d and the exhaust air passage 134c interpose a single partition plate 134a, and are disposed perpendicularly to each other. Air flowing in the exhaust air passage 134c and air flowing in the supply air passage 134d are to exchange sensible heat and latent heat (total heat exchange) via the partition plate 134a having the heat transfer property and the moisture permeability. In the air conditioning system 100, the first heat recovery unit 130 recovers heat with use of the refrigerant flowing in the first auxiliary refrigerant circuit RC2, and the heat exchange unit 134 further recovers heat between air flows (the return air RA and the outdoor air OA) in the casing 150, to achieve better operation efficiency of the air conditioner 101.

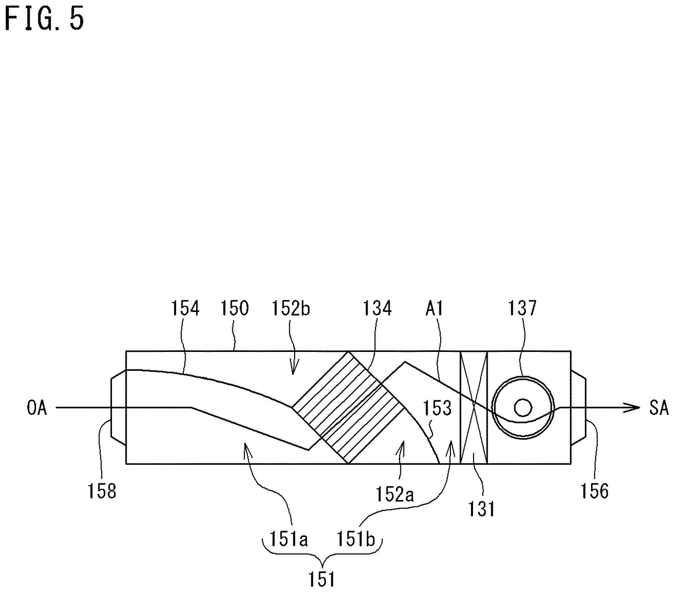

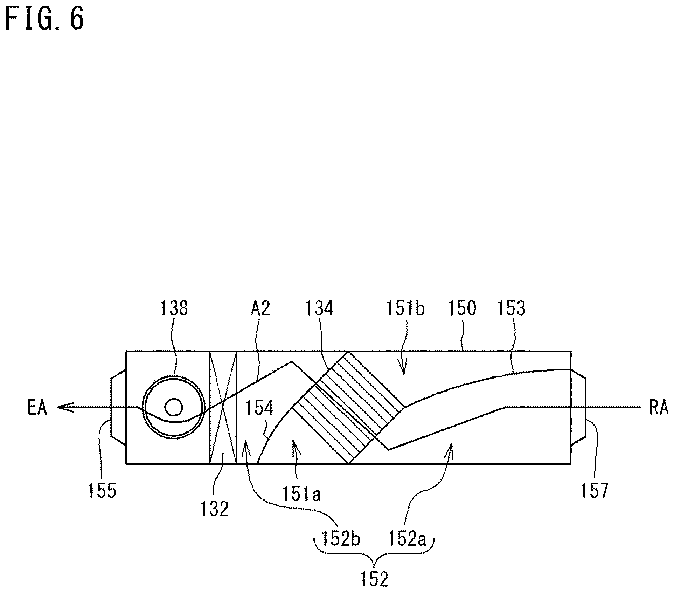

FIG. 5 is a schematic explanatory sectional view taken along line X-X indicated in FIG. 3. FIG. 6 is a schematic explanatory sectional view taken along line Y-Y indicated in FIG. 3. As depicted in FIG. 3, FIG. 5, and FIG. 6, the first heat recovery unit 130 includes the casing 150. The casing 150 has the interior sectioned by the heat exchange unit 134 into two regions, specifically, a region adjacent to the indoor space S1 and a region adjacent to the outdoor space S2 (see FIG. 1). As depicted in FIG. 5, the casing 150 is provided therein with an upstream supply air passage 151a disposed upstream of the heat exchange unit 134 on the first air flow A1, and a downstream supply air passage 151b disposed downstream of the heat exchange unit 134 on the first air flow A1. The upstream supply air passage 151a and the downstream supply air passage 151b constitute a supply air passage 151 causing the indoor space S1 and the outdoor space S2 to communicate with each other via the heat exchange unit 134.

As depicted in FIG. 6, the casing 150 is provided therein with an upstream exhaust air passage 152a disposed upstream of the heat exchange unit 134 on the second air flow A2, and a downstream exhaust air passage 152b disposed downstream of the heat exchange unit 134 on the second air flow A2. The upstream exhaust air passage 152a and the downstream exhaust air passage 152b constitute an exhaust air passage 152 causing the indoor space S1 and the outdoor space S2 to communicate with each other via the heat exchange unit 134.

As depicted in FIG. 5 and FIG. 6, the downstream supply air passage 151b and the upstream exhaust air passage 152a interpose a sectioning wall 153. The upstream supply air passage 151a and the downstream exhaust air passage 152b interpose a sectioning wall 154.

As depicted in FIG. 5, the downstream supply air passage 151b is provided, adjacent to the supply air blow-out port 156, with the supply fan 137 and the supply air auxiliary heat exchanger 131. The supply fan 137 operates to generate the first air flow A1, and the outdoor air OA in the outdoor space S2 passes the supply air passage 151 to exchange heat in the supply air auxiliary heat exchanger 131 and be supplied into the indoor space S1 as the supply air SA. As depicted in FIG. 2 and FIG. 3, the supply air auxiliary heat exchanger 131 causes heat exchange (heat recovery) between the refrigerant flowing in the first auxiliary refrigerant circuit RC2 and air (the outdoor air OA) passing the supply air passage 151.

As depicted in FIG. 6, the downstream exhaust air passage 152b is provided, adjacent to the exhaust air blow-out port 155, with the exhaust fan 138 and the exhaust air auxiliary heat exchanger 132. The exhaust fan 138 operates to generate the second air flow A2, and the return air RA from the indoor space S1 passes the exhaust air passage 152 to exchange heat in the exhaust air auxiliary heat exchanger 132 and be exhausted as the exhaust air EA to the outdoor space S2. As depicted in FIG. 2 and FIG. 3, the exhaust air auxiliary heat exchanger 132 causes heat exchange (heat recovery) between the refrigerant flowing in the first auxiliary refrigerant circuit RC2 and air (the exhaust air EA) passing the exhaust air passage 152.

The first heat recovery unit 130 according to the present embodiment includes the supply air auxiliary heat exchanger 131 and the exhaust air auxiliary heat exchanger 132. Alternatively, the heat recovery unit according to the present disclosure may include only a supply air auxiliary heat exchanger. The first heat recovery unit 130 according to the present embodiment includes the heat exchange unit 134. Alternatively, the heat recovery unit according to the present disclosure does not have to include any heat exchange unit. The present embodiment exemplifies the first heat recovery unit 130 including the supply air auxiliary heat exchanger 131 and the exhaust air auxiliary heat exchanger 132 accommodated in the casing 150. Alternatively, each of the supply air and exhaust air auxiliary heat exchangers in the heat recovery unit according to the present disclosure does not have to be accommodated in the casing. The present embodiment exemplifies the first heat recovery unit 130 including the supply air auxiliary heat exchanger 131 and the exhaust air auxiliary heat exchanger 132 accommodated in the single casing 150. Alternatively, each of the supply air and exhaust air auxiliary heat exchangers in the heat recovery unit according to the present disclosure may be configured to be separated and installed at different positions.

As described above, in order to connect the first auxiliary refrigerant circuit RC2 in the first heat recovery unit 130 to the heat source refrigerant circuit RC1, the air conditioning system 100 allows facilitated connection from the first auxiliary refrigerant circuit RC2, to each of the second connection pipe 12 and the third connection pipe 13 via the auxiliary heat exchanger switching valve 133 with no need to interpose any device such as the refrigerant flow path switching device 140 including a large number of switching valves.

### [Regarding control unit]

FIG. 7 is a control block diagram of the air conditioning system 100. As depicted in FIG. 7, the air conditioning system 100 includes the control unit 115. The control unit 115 is configured to control behavior of the air conditioner 101 and the refrigerant flow path switching device 140, and is exemplarily constituted by a microcomputer including a processor such as a CPU and a memory such as a RAM or a ROM. The control unit 115 may alternatively be embodied as hardware with use of an LSI, an ASIC, an FPGA, or the like. The control unit 115 exerts a predetermined function when the processor executes a program installed in the memory. The control unit 115 may be provided integrally with the air conditioner 101 as part of the air conditioner 101, or may be provided separately from the air conditioner 101 as a separate device.

The control unit 115 according to the present embodiment is provided in the outdoor unit 110. The control unit 115 is connected with the compressor 25, the first flow path switching valve 26, the second flow path switching valve 27, the third flow path switching valve 28, the outdoor fan 33, the first outdoor expansion valve 34, and the second outdoor expansion valve 35, which are incorporated in the outdoor unit 110. The control unit 115 is connected with the indoor expansion valve 51 and the indoor fan 53 via the indoor control unit 54 in the indoor unit 120. The control unit 115 is connected with the auxiliary heat exchanger switching valve 133, the motor valve 136, the supply fan 137, and the exhaust fan 138 in the first heat recovery unit 130. The control unit 115 may alternatively be connected to the auxiliary heat exchanger switching valve 133, the motor valve 136, the supply fan 137, and the exhaust fan 138 via a control unit (not depicted) of the first heat recovery unit 130. The control unit 115 is connected with the first valve EV1, the second valve EV2, and the third valve EV3 via the control unit (not depicted) of the refrigerant flow path switching device 140 (the switching unit 70). The control unit 115 is connected with a first shutoff valve 161 and a second shutoff valve 162. The control unit 115 controls behavior of the above connected constituents in accordance with an operation situation of the air conditioning system 100.

### [Regarding shutoff valves]

As depicted in FIG. 1 and FIG. 2, the air conditioning system 100 includes the first shutoff valve 161 and the second shutoff valve 162. The first shutoff valve 161 and the second shutoff valve 162 are configured as motor valves. The first shutoff valve 161 is disposed on the first branching pipe 14, and the second shutoff valve 162 is disposed on the second branching pipe 15. The control unit 115 controls behavior of the first shutoff valve 161 and the second shutoff valve 162. The control unit 115 is connected with a refrigerant sensor 180 (see FIG. 7).

In the air conditioning system 100, the refrigerant sensor 180 (see FIG. 7) is disposed at a position enabling sensing of any refrigerant leaking from the first heat recovery unit 130. When the refrigerant sensor 180 senses any refrigerant, the control unit 115 operates the first shutoff valve 161 and the second shutoff valve 162. When the first shutoff valve 161 and the second shutoff valve 162 operate in the air conditioning system 100, the first auxiliary refrigerant circuit RC2 in the first heat recovery unit 130 is completely separated from the remaining refrigerant circuits RC1, RC3, and RC4 in the air conditioning system 100. Even if the refrigerant (R32 in the present embodiment) having combustibility leaks from the first heat recovery unit 130, the air conditioning system 100 can thus inhibit leakage from the first heat recovery unit 130 of the refrigerant having quantity exceeding the refrigerant being stored in the first auxiliary refrigerant circuit RC2. The air conditioning system according to the present disclosure adopting a noncombustible refrigerant does not have to include the first and second shutoff valves and the refrigerant sensor.

### [Operation of air conditioning system]

With reference to FIG. 2, description is made hereinafter to a case where all the indoor units 120 in operation in the air conditioning system 100 execute cooling operation (hereinafter, also referred to as "full cooling operation"), a case where all the indoor units 120 in operation execute heating operation (hereinafter, also referred to as "full heating operation), and a case where some of the indoor units 120 in operation execute cooling operation and the remaining ones execute heating operation (hereinafter, also referred to as "cooling and heating mixed operation").

### (Full cooling operation)

During full cooling operation, the control unit 115 adjusts the valves as follows. In the switching unit 70, the first valve EV1 is fully closed, the second valve EV2 is fully opened, and the third valve EV3 is adjusted in opening degree. The indoor expansion valve 51 is adjusted in opening degree, the first and second outdoor expansion valves 34 and 35 are fully opened, and the first and second shutoff valves 161 and 162 are fully opened. The first flow path switching valve 26 in the outdoor unit 110 is switched to connect the discharge pipe 25a of the compressor 25 and the gas side end of the second heat exchange unit 32. The second flow path switching valve 27 is switched to connect the discharge pipe 25a and the second connection pipe 12. The third flow path switching valve 28 is switched to connect the discharge pipe 25a and the gas side end of the first heat exchange unit 31.

In the indoor unit 120 being stopped, during any one of full cooling operation, full heating operation, and cooling and heating mixed operation, the control unit 115 causes the indoor expansion valve 51 to be fully closed, causes the first valve EV1 corresponding to this indoor unit 120 to have the minimum opening degree, and causes the second valve EV2 and the third valve EV3 to be fully closed.

When the compressor 25 is driven, a high-pressure gas refrigerant compressed by the compressor 25 passes the discharge pipe 25a, the first flow path switching valve 26, the third flow path switching valve 28, and the like, and then flows into the outdoor heat exchanger 30 to be condensed. The refrigerant condensed in the outdoor heat exchanger 30 passes the first and second outdoor expansion valves 34 and 35, the liquid-side shutoff valve 21, and the like, to flow into the first connection pipe 11.

The refrigerant having entered the first connection pipe 11 flows in the first header pipe 55 of the refrigerant flow path switching device 140, and flows into the fourth refrigerant tube P4 of each of the switching units 70. The refrigerant having entered the fourth refrigerant tube P4 flows into the first heat transfer tube 59a of the subcooling heat exchanger 59, and then passes the utilization liquid pipe 62 to flow into the indoor unit 120.

The refrigerant having entered the fourth refrigerant tube P4 also branches into the fifth refrigerant tube P5, is decompressed in accordance with the opening degree of the third valve EV3, and flows into the second heat transfer tube 59b of the subcooling heat exchanger 59. The refrigerant flowing in the first heat transfer tube 59a and the refrigerant flowing in the second heat transfer tube 59b exchange heat with each other in the subcooling heat exchanger 59, and the refrigerant flowing in the first heat transfer tube 59a is subcooled and flows into the indoor unit 120.

The refrigerant flowing in the second heat transfer tube 59b of the subcooling heat exchanger 59 flows from the seventh refrigerant tube P7 into the fourth header pipe 58, passes the connecting tube 63, and flows into the third header pipe 57. The refrigerant having entered the indoor unit 120 is decompressed at the indoor expansion valve 51 and is then evaporated in the indoor heat exchanger 52.

In the indoor unit 120, the refrigerant evaporated in the indoor heat exchanger 52 flows from the gas tube GP into the utilization gas pipe 61, mainly passes the second valve EV2 and flows into the third header pipe 57. The refrigerant having entered the third header pipe 57 passes the third connection pipe 13 and the gas-side second shutoff valve 23, and then flows into the accumulator 24 to be sucked in to the compressor 25.

### (Regarding processing by first heat recovery unit during cooling operation)

In the air conditioning system 100 executing cooling operation, the control unit 115 switches the auxiliary heat exchanger switching valve 133 to connect the first auxiliary refrigerant tube 135a and the fourth auxiliary refrigerant tube 135d and connect the third auxiliary refrigerant tube 135c and the fifth auxiliary refrigerant tube 135e (see FIG. 3). The exhaust air auxiliary heat exchanger 132 in the first heat recovery unit 130 is supplied with a high-pressure gas refrigerant from the second connection pipe 12 and the first branching pipe 14, and the gas refrigerant flows from the first auxiliary refrigerant tube 135a into the exhaust air auxiliary heat exchanger 132. In this case, the control unit 115 adjusts the opening degree of the motor valve 136 to adjust quantity of the refrigerant flowing into the exhaust air auxiliary heat exchanger 132 and decompress the refrigerant. The gas refrigerant exchanges heat with air (the exhaust air EA) in the exhaust air auxiliary heat exchanger 132 to be condensed into a liquid refrigerant. The liquid refrigerant is supplied to the supply air auxiliary heat exchanger 131 via the second auxiliary refrigerant tube 135b. The liquid refrigerant exchanges heat with air (the outdoor air OA) in the supply air auxiliary heat exchanger 131 to be evaporated into a low-pressure gas refrigerant. The low-pressure gas refrigerant is returned to the third connection pipe 13 via the second branching pipe 15. The first heat recovery unit 130 cools the outdoor air OA in this manner during cooling operation, and supplies the first space S11 with the outdoor air OA thus cooled. A high-pressure gas refrigerant flowing to the second connection pipe 12 via the second flow path switching valve 27 does not flow into the indoor unit 120 because the first valve EV1 is fully closed.

### (Regarding full heating operation)

During full heating operation, the control unit 115 adjusts the valves as follows. In the switching unit 70, the first valve EV1 is fully opened, the second valve EV2 is fully closed, and the third valve EV3 is fully closed. The indoor expansion valve 51 is fully opened, the first and second outdoor expansion valves 34 and 35 are adjusted in opening degree, and the first and second shutoff valves 161 and 162 are fully opened. The first flow path switching valve 26 in the outdoor unit 110 is switched to connect the refrigerant pipe 25c and the gas side end of the second heat exchange unit 32. The second flow path switching valve 27 is switched to connect the discharge pipe 25a and the second connection pipe 12. The third flow path switching valve 28 is switched to connect the refrigerant pipe 25c and the gas side end of the first heat exchange unit 31.

When the compressor 25 is driven, the high-pressure gas refrigerant compressed by the compressor 25 passes the discharge pipe 25a, the second flow path switching valve 27, and the like, and then flows into the second connection pipe 12. The refrigerant having entered the second connection pipe 12 passes the first valve EV1 via the second header pipe 56 of the refrigerant flow path switching device 140 and the first refrigerant tube P1 of the switching unit 70, and flows from the utilization gas pipe 61 into the gas tube GP of the indoor unit 120.

The refrigerant having entered the gas tube GP flows into the indoor heat exchanger 52 of the indoor unit 120 to be condensed. The condensed refrigerant passes the indoor expansion valve 51, flows in the liquid tube LP, and flows into the utilization liquid pipe 62 of the switching unit 70. The refrigerant having entered the utilization liquid pipe 62 passes the subcooling heat exchanger 59 and the fourth refrigerant tube P4, and flows into the first header pipe 55.

The refrigerant having entered the first header pipe 55 flows in the first connection pipe 11, flows into the outdoor unit 110, and is decompressed at the first and second outdoor expansion valves 34 and 35. The decompressed refrigerant is evaporated while passing the outdoor heat exchanger 30, passes the first flow path switching valve 26, the third flow path switching valve 28, and the like, then flows into the accumulator 24, and is sucked into the compressor 25.

### (Regarding processing by first heat recovery unit during heating operation)

In the air conditioning system 100 executing heating operation, the control unit 115 switches the auxiliary heat exchanger switching valve 133 to connect the third auxiliary refrigerant tube 135c and the fourth auxiliary refrigerant tube 135d and connect the first auxiliary refrigerant tube 135a and the fifth auxiliary refrigerant tube 135e (see FIG. 3). The supply air auxiliary heat exchanger 131 in the first heat recovery unit 130 is supplied with a high-pressure gas refrigerant from the second connection pipe 12 and the first branching pipe 14, and the gas refrigerant flows from the fourth auxiliary refrigerant tube 135d and the third auxiliary refrigerant tube 135c into the supply air auxiliary heat exchanger 131. In this case, the control unit 115 adjusts the opening degree of the motor valve 136 to adjust quantity of the refrigerant flowing into the supply air auxiliary heat exchanger 131 and decompress the refrigerant. The gas refrigerant exchanges heat with air (the outdoor air OA) in the supply air auxiliary heat exchanger 131 to be condensed into a liquid refrigerant. The liquid refrigerant is supplied to the exhaust air auxiliary heat exchanger 132 via the second auxiliary refrigerant tube 135b, and exchanges heat with air (the exhaust air EA) in the exhaust air auxiliary heat exchanger 132 to be evaporated into a low-pressure gas refrigerant. The low-pressure gas refrigerant is returned to the third connection pipe 13 via the first auxiliary refrigerant tube 135a, the fifth auxiliary refrigerant tube 135e, and the second branching pipe 15. The first heat recovery unit 130 heats the outdoor air OAin this manner during heating operation, and supplies the first space S11 with the outdoor air OA.

### (Cooling and heating mixed operation)

During cooling and heating mixed operation, the control unit 115 adjusts the valves as follows. In the switching unit 70 (hereinafter, also referred to as a "cooling switching unit 70") corresponding to the indoor unit 120 (hereinafter, also referred to as a "cooling indoor unit 120") executing cooling operation in the indoor units 120 in operation, the first valve EV1 has the minimum opening degree, the second valve EV2 is fully opened, the third valve EV3 is adjusted in opening degree, the indoor expansion valve 51 in the cooling indoor unit 120 is adjusted in opening degree, and the first and second shutoff valves 161 and 162 are fully opened. The first flow path switching valve 26 in the outdoor unit 110 is switched to connect the refrigerant pipe 25c and the gas side end of the second heat exchange unit 32. The second flow path switching valve 27 is switched to connect the discharge pipe 25a and the second connection pipe 12. The third flow path switching valve 28 is switched to connect the discharge pipe 25a and the gas side end of the first heat exchange unit 31.

In the switching unit 70 (hereinafter, also referred to as a "heating switching unit 70") corresponding to the indoor unit 120 (hereinafter, also referred to as a "heating indoor unit 120") executing heating operation among the indoor units 120 in operation, the first valve EV1 is fully opened, the second valve EV2 is fully closed, the third valve EV3 is fully closed, the indoor expansion valve 51 in the heating indoor unit 120 is fully opened, and the first outdoor expansion valve 34 and the second outdoor expansion valve 35 are adjusted in opening degree. According to the present embodiment, the indoor unit 120 (the cooling indoor unit 120) in the first space S11 executes cooling operation whereas the indoor unit 120 (the heating indoor unit 120) in the second space S12 executes heating operation. In this case, in the first heat recovery unit 130 provided for the first space S11, the supply air auxiliary heat exchanger 131 functions as an evaporator correspondingly to the cooling indoor unit 120 in the first space S11, and the exhaust air auxiliary heat exchanger 132 functions as a condenser.

When the compressor 25 is driven, part of the high-pressure gas refrigerant compressed by the compressor 25 passes the discharge pipe 25a and the second flow path switching valve 27, and then flows into the second connection pipe 12. Another part of the high-pressure gas refrigerant compressed by the compressor 25 passes the discharge pipe 25a and the third flow path switching valve 28, is condensed in the first heat exchange unit 31 of the outdoor heat exchanger 30, and passes the first outdoor expansion valve 34, and part thereof flows into the first connection pipe 11 whereas another part thereof flows into the second outdoor expansion valve 35. The refrigerant condensed in the first heat exchange unit 31 passes the second outdoor expansion valve 35, is evaporated in the second heat exchange unit 32, passes the first flow path switching valve 26, and is sucked into the compressor 25. During cooling and heating mixed operation, how to use the second heat exchange unit 32 varies in accordance with balance between quantity of a condensed refrigerant and quantity of an evaporated refrigerant in the indoor unit 120 and the first heat recovery unit 130. During cooling and heating mixed operation, both the first heat exchange unit 31 and the second heat exchange unit 32 function as a condenser or an evaporator in accordance with the balance between the quantity of the condensed refrigerant and the quantity of the evaporated refrigerant in the indoor unit 120 and the first heat recovery unit 130.

The refrigerant having entered the second connection pipe 12 flows into the second header pipe 56 of the refrigerant flow path switching device 140, flows in the first refrigerant tube P1, the first valve EV1, and the utilization gas pipe 61 of the heating switching unit 70, and flows into the gas tube GP.

The refrigerant having entered the gas tube GP is condensed in the indoor heat exchanger 52 of the heating indoor unit 120. The condensed refrigerant flows from the liquid tube LP into the utilization liquid pipe 62 of the heating switching unit 70, flows in the subcooling heat exchanger 59 and the fourth refrigerant tube P4, and flows into the first header pipe 55.

The refrigerant having entered the first connection pipe 11 from the outdoor unit 110 also flows into the first header pipe 55. The refrigerant having entered the first header pipe 55 passes the fourth refrigerant tube P4 of the cooling switching unit 70, the subcooling heat exchanger 59, the utilization liquid pipe 62, and the liquid tube LP, and flows into the cooling indoor unit 120. The refrigerant having passed the subcooling heat exchanger 59 is subcooled by the refrigerant that flowed in the fifth refrigerant tube P5 branched from the fourth refrigerant tube P4, and that decompressed at the third valve EV3.

The refrigerant having entered the cooling indoor unit 120 is decompressed at the indoor expansion valve 51, and is evaporated in the indoor heat exchanger 52 to cool the indoor space. The evaporated refrigerant flows in the gas tube GP, flows into the utilization gas pipe 61 of the cooling switching unit 70, passes the second valve EV2, flows into the third refrigerant tube P3 and the third header pipe 57, flows in the third connection pipe 13, and flows into the accumulator 24 to be sucked into the compressor 25.

In the first heat recovery unit 130, the supply air auxiliary heat exchanger 131 functions as an evaporator correspondingly to the cooling indoor unit 120 in the first space S11, cools the outdoor air OA, and supplies the first space S11 with the supply air SA. In the first heat recovery unit 130, the exhaust air auxiliary heat exchanger 132 functions as a condenser, recovers heat from the return air RA to evaporate a gas refrigerant, and discharges the return air RA increased in temperature as the exhaust air EA to the outdoor space S2.

### [Air conditioning system according to second embodiment]

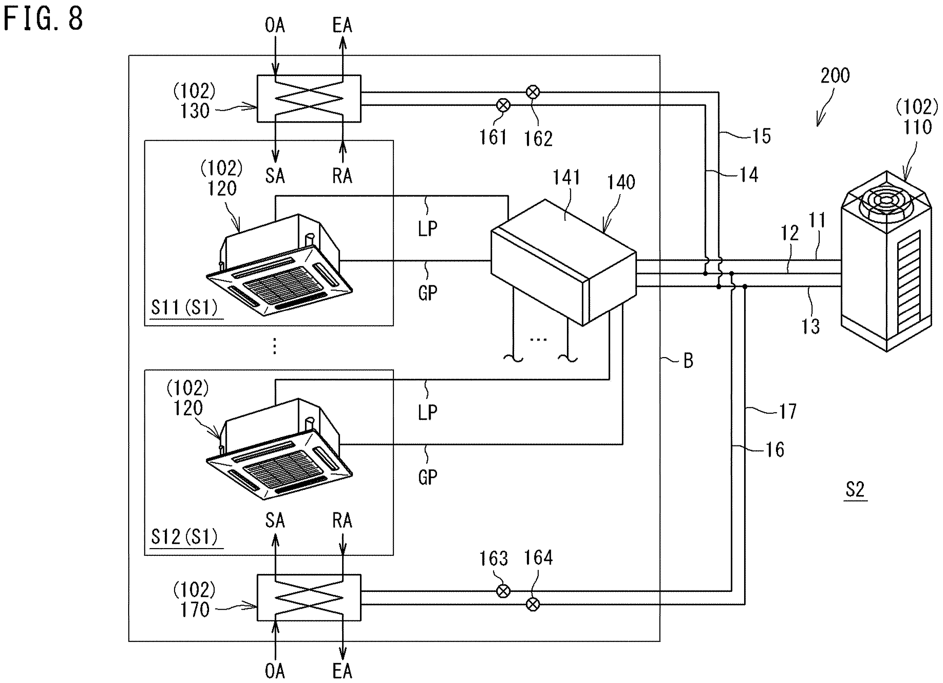

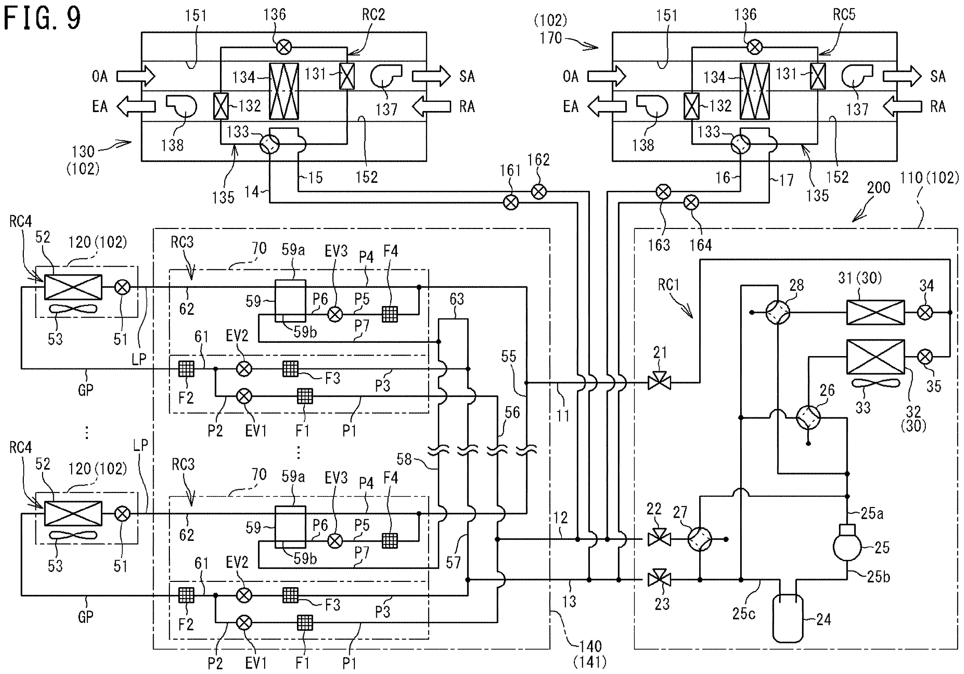

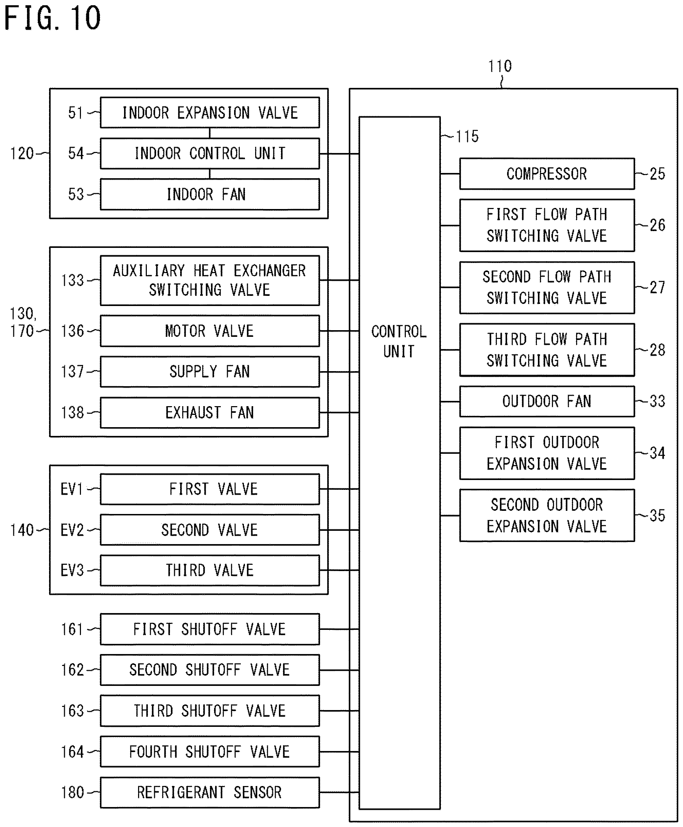

FIG. 8 is a schematic diagram depicting an entire configuration of an air conditioning system according to the second embodiment of the present disclosure. FIG. 9 is a refrigerant circuit diagram of the air conditioning system according to the second embodiment. FIG. 10 is a control block diagram of the air conditioning system according to the second embodiment. As depicted in FIG. 8, the present disclosure provides an air conditioning system 200 according to the second embodiment, including an air conditioner 102 and a refrigerant flow path switching device 140. In FIG. 8 to FIG. 10, constituents same as the constituents described with reference to FIG. 1 to FIG. 7 are denoted by identical reference signs, and the following description will not refer to the constituents denoted by the identical reference signs unless otherwise specifically described.

As depicted in FIG. 8 and FIG. 9, the air conditioner 102 includes the outdoor unit 110 as a heat source unit, the indoor unit 120 as a utilization unit, the first heat recovery unit 130, and a second heat recovery unit 170. In the air conditioner 101 according to the present embodiment, two or more indoor units 120 and the two heat recovery units 130 and 170 are connected to the single outdoor unit 110. In other words, the air conditioner 102 additionally includes the second heat recovery unit 170 in comparison to the air conditioner 101 described earlier. The air conditioning system 200 according to the second embodiment is different from the air conditioning system 100 according to the first embodiment in that the air conditioning system 200 includes the second heat recovery unit 170.

In the air conditioning system 200 according to the present embodiment, one of the indoor units 120 conditions air in the first space S11, and the first heat recovery unit 130 ventilates the first space S11. Furthermore, in the air conditioning system 200, another one of the indoor units 120 conditions air in the second space S12, and the second heat recovery unit 170 ventilates the second space S12.

### [Configuration of second heat recovery unit]

As depicted in FIG. 8 and FIG. 9, the air conditioning system 200 according to the present embodiment includes the first heat recovery unit 130 and the second heat recovery unit 170. The first heat recovery unit 130 and the second heat recovery unit 170 have common configurations (are identical units).

The second heat recovery unit 170 is configured to ventilate the second space S12, and has an auxiliary refrigerant circuit including the supply air auxiliary heat exchanger 131, and the exhaust air auxiliary heat exchanger 132 connected in series to the supply air auxiliary heat exchanger 131 via the auxiliary refrigerant pipe 135. The auxiliary refrigerant circuit included in the second heat recovery unit 170 will be referred to as a second auxiliary refrigerant circuit RC5 in the following description, in order for distinction from the first auxiliary refrigerant circuit RC2 included in the first heat recovery unit 130.

The second heat recovery unit 170 includes the second supply fan 137 configured to supply the second space S12 with the outdoor air OA having passed the supply air auxiliary heat exchanger 131, and the second exhaust fan 138 configured to discharge to outside, air (the return air RA) existing in the second space S12 and having passed the exhaust air auxiliary heat exchanger 132. The air conditioning system 200 includes the auxiliary heat exchanger switching valve 133 configured to switch a refrigerant flow in the second auxiliary refrigerant circuit RC5.

The auxiliary heat exchanger switching valve 133 (see FIG. 3) in the second heat recovery unit 170 is a four-way switching valve having four ports connected respectively with the first auxiliary refrigerant tube 135a, the second auxiliary refrigerant tube 135b, the fourth auxiliary refrigerant tube 135d, and the fifth auxiliary refrigerant tube 135e. As depicted in FIG. 9, the fourth auxiliary refrigerant tube 135d (see FIG. 3) is connected to a third branching pipe 16, and the fifth auxiliary refrigerant tube 135e (see FIG. 3) is connected to a fourth branching pipe 17.

The second auxiliary refrigerant circuit RC5 is connected to the second connection pipe 12 via the third branching pipe 16, and is connected to the third connection pipe 13 via the fourth branching pipe 17. In other words, the second auxiliary refrigerant circuit RC5 in the second heat recovery unit 170 is connected to the heat source refrigerant circuit RC1 in outdoor unit 110 not via the refrigerant flow path switching device 140.

In the air conditioning system 200, the heat source refrigerant circuit RC1 and the second auxiliary refrigerant circuit RC5 are connected by the second connection pipe 12 and the third connection pipe 13 via the third and fourth branching pipes 16 and 17 and the auxiliary heat exchanger switching valve 133.

As described above, even in the case where the air conditioning system 200 includes the first heat recovery unit 130 and the second heat recovery unit 170, the air conditioning system 200 allows facilitated connection from the heat recovery units 130 and 170 to the second connection pipe 12 and the third connection pipe 13 via the auxiliary heat exchanger switching valves 133 and 133.

The air conditioning system 200 includes a third shutoff valve 163 and a fourth shutoff valve 164. The third shutoff valve 163 and the fourth shutoff valve 164 are configured as motor valves. The third shutoff valve 163 is disposed on the third branching pipe 16, and the third shutoff valve 163 is disposed on the fourth branching pipe 17. The third shutoff valve 163 and the fourth shutoff valve 164 are connected to the control unit 115 and are operation controlled by the control unit 115.

In the air conditioning system 200, the refrigerant sensor 180 (see FIG. 10) is disposed at a position enabling sensing of any refrigerant leaking from the first heat recovery unit 130 and the second heat recovery unit 170. The control unit 115 is connected with the refrigerant sensor 180, and operates to close the shutoff valves 161, 162, 163, and 164 when the refrigerant sensor 180 senses any refrigerant.

When the third shutoff valve 163 and the fourth shutoff valve 164 operate in the air conditioning system 200, the second auxiliary refrigerant circuit RC5 is separated from the remaining refrigerant circuits RC1, RC2, RC3, and RC4 in the air conditioning system 200. Even if the refrigerant leaks from the second heat recovery unit 170, the air conditioning system 200 can thus inhibit leakage from the second heat recovery unit 170 of the refrigerant having quantity exceeding the refrigerant being stored in the second auxiliary refrigerant circuit RC5.

### [Functional effects of embodiments]

Each of the air conditioning systems 100 and 200 according to the first and second embodiments described above includes: the outdoor unit 110 having the heat source refrigerant circuit RC1 including the compressor 25 and the outdoor heat exchanger 30; the indoor unit 120 disposed in the first space S11 and including the indoor heat exchanger 52; the indoor unit 120 disposed in the second space S12 and including the indoor heat exchanger 52, and the refrigerant flow path switching device 140 having the intermediate refrigerant circuit RC3 configured to cause the indoor heat exchangers 52 to individually function as an evaporator or a condenser. Each of the air conditioning systems 100 and 200 includes: the first auxiliary refrigerant circuit RC2 having the supply air auxiliary heat exchanger 131 and the exhaust air auxiliary heat exchanger 132 connected in series to the supply air auxiliary heat exchanger 131 via the auxiliary refrigerant pipe 135; and the first heat recovery unit 130 having the supply fan 137 configured to supply the first space S11 with outdoor air having passed the supply air auxiliary heat exchanger 131, the exhaust fan 138 configured to discharge to outside, air existing in the first space S11 and having passed the exhaust air auxiliary heat exchanger 132, and the auxiliary heat exchanger switching valve 133 configured to switch the refrigerant flow in the first auxiliary refrigerant circuit RC2. In each of the air conditioning systems 100 and 200, the heat source refrigerant circuit RC1 and the intermediate refrigerant circuit RC3 are connected by the first connection pipe 11 having a flow of a liquid refrigerant, the second connection pipe 12 having a flow of a high-pressure gas refrigerant, and the third connection pipe 13 having a flow of a low-pressure gas refrigerant, whereas the heat source refrigerant circuit RC1 and the first auxiliary refrigerant circuit RC2 are connected by the second connection pipe 12 and the third connection pipe 13 via the auxiliary heat exchanger switching valve 133.

The configuration described above achieves connection between the outdoor unit 110 and the first heat recovery unit 130 by the second connection pipe 12 and the third connection pipe 13 via the auxiliary heat exchanger switching valve 133. Accordingly, each of the air conditioning systems 100 and 200, which includes the first heat recovery unit 130 having the supply air auxiliary heat exchanger 131 and the exhaust air auxiliary heat exchanger 132, can be reduced in the number of the switching valves and can be suppressed in the number of work processes necessary for connection between the heat source refrigerant circuit RC1 and the first auxiliary refrigerant circuit RC2.

Each of the air conditioning systems 100 and 200 thus configured achieves efficient heat recovery with use of the first heat recovery unit 130 by simply controlling the refrigerant flow in the first auxiliary refrigerant circuit RC2 with use of the auxiliary heat exchanger switching valve 133 in accordance with balance between evaporator capacity and condenser capacity. This enables efficient operation of the air conditioning systems 100 and 200.

Each of the air conditioning systems 100 and 200 according to the first and second embodiments described above further includes: the casing 150 accommodating the first auxiliary refrigerant circuit RC2, the supply fan 137, and the exhaust fan 138, and provided with the supply air passage 151 for air passing the supply air auxiliary heat exchanger 131 and the exhaust air passage 152 for air passing the exhaust air auxiliary heat exchanger 132; and the heat exchange unit 134 configured to cause heat exchange between air existing in the supply air passage 151 and being subject to passing the supply air auxiliary heat exchanger 131 and air existing in the exhaust air passage 152 and being subject to passing the exhaust air auxiliary heat exchanger 132. In this configuration, the single casing 150 accommodates the first heat recovery unit 130 including the heat exchange unit 134, to simplify a pipe configuration around the first heat recovery unit 130. This further facilitates connecting work for the heat source refrigerant circuit RC1 and the first auxiliary refrigerant circuit RC2.

In each of the air conditioning systems 100 and 200 according to the first and second embodiments described above, the first heat recovery unit 130 includes the casing 150 that accommodates the first auxiliary refrigerant circuit RC2 and the auxiliary heat exchanger switching valve 133.

In this configuration, the single casing 150 accommodates the first heat recovery unit 130, to simplify the pipe configuration around the first heat recovery unit 130. This further facilitates connecting work for the heat source refrigerant circuit RC1 and the first auxiliary refrigerant circuit RC2.

Each of the air conditioning systems 100 and 200 according to the first and second embodiments described above adopts a combustible refrigerant, and further includes the shutoff valves 161 to 164 provided between the auxiliary heat exchanger switching valve 133 and the second connection pipe 12 and between the auxiliary heat exchanger switching valve 133 and the third connection pipe 13. This configuration suppresses quantity of the combustible refrigerant leaking from the first heat recovery units 130 and 170.

The air conditioning system 200 according to the second embodiment described above includes the indoor unit 120 disposed in the second space S12 different from the first space S11. The air conditioning system 200 further includes the second heat recovery unit 170 having the second auxiliary refrigerant circuit RC5 having the supply air auxiliary heat exchanger 131 and the exhaust air auxiliary heat exchanger 132 connected in series to the supply air auxiliary heat exchanger 131 via the auxiliary refrigerant pipe 135, the supply fan 137 configured to supply the second space S12 with outdoor air having passed the supply air auxiliary heat exchanger 131, the exhaust fan 138 configured to discharge to outside, air existing in the second space S12 and having passed the exhaust air auxiliary heat exchanger 132, and the auxiliary heat exchanger switching valve 133 configured to switch the refrigerant flow in the second auxiliary refrigerant circuit RC5. In the air conditioning system 200, the heat source refrigerant circuit RC1 and the second auxiliary refrigerant circuit RC5 are connected by the second connection pipe 12 and the third connection pipe 13 via the auxiliary heat exchanger switching valve 133.

This configuration, which includes the plurality of heat recovery units (the first heat recovery unit 130 and the second heat recovery unit 170) having the auxiliary heat exchanger for heat recovery, can be reduced in the number of the switching valves and can be suppressed in the number of work processes necessary for connection between the heat source refrigerant circuit RC1 and each of the auxiliary refrigerant circuits RC2 and RC5.

### REFERENCE SIGNS LIST

- 11: first connection pipe
- 12: second connection pipe
- 13: third connection pipe
- 25: compressor
- 30: outdoor heat exchanger (first heat exchanger)
- 52: indoor heat exchanger (second heat exchanger, third heat exchanger)
- 70: switching unit (intermediate unit)
- 100: air conditioning system (first embodiment)
- 110: outdoor unit (first unit)
- 120: indoor unit (second unit, third unit)
- 130: first heat recovery unit
- 131: supply air auxiliary heat exchanger (first auxiliary heat exchanger)
- 132: exhaust air auxiliary heat exchanger (second auxiliary heat exchanger)
- 133: auxiliary heat exchanger switching valve (first switching valve, second switching valve)
- 134: heat exchange unit
- 135: auxiliary refrigerant pipe (refrigerant pipe)
- 137: supply fan (first supply fan, second supply fan)
- 138: exhaust fan (first exhaust fan, second exhaust fan)
- 150: casing
- 151: supply air passage
- 152: exhaust air passage
- 161: first shutoff valve (shutoff valve)
- 162: second shutoff valve (shutoff valve)
- 170: second heat recovery unit
- 200: air conditioning system (second embodiment)
- RC1: heat source refrigerant circuit (first refrigerant circuit)
- RC2: first auxiliary refrigerant circuit
- RC3: intermediate refrigerant circuit
- RC5: second auxiliary refrigerant circuit
- S11: first space
- S12: second space

## Claims

1. An air conditioning system (100, 200) comprising:
a first unit (110) having a first refrigerant circuit (RC1) including a compressor (25) and a first heat exchanger (30);
a second unit (120) disposed in a first space (S11) and including a second heat exchanger (52);
a third unit (120) including a third heat exchanger (52);
an intermediate unit (70) having an intermediate refrigerant circuit (RC3) configured to cause the second heat exchanger (52) and the third heat exchanger (52) to individually function as an evaporator or a condenser;
a first auxiliary refrigerant circuit (RC2) including a first auxiliary heat exchanger (131) and a second auxiliary heat exchanger (132) connected in series to the first auxiliary heat exchanger (131) via a refrigerant pipe (135); and
a first heat recovery unit (130) including a first supply fan (137) configured to supply the first space (S1 1) with outdoor air having passed the first auxiliary heat exchanger (131), a first exhaust fan (138) configured to discharge, to outside (S2), air in the first space (S11) that having passed the second auxiliary heat exchanger (132), and a first switching valve (133) configured to switch a refrigerant flow in the first auxiliary refrigerant circuit (RC2),
wherein
the first refrigerant circuit (RC1) and the intermediate refrigerant circuit (RC3) are connected by a first connection pipe (11) having a flow of a liquid refrigerant, a second connection pipe (12) having a flow of a high-pressure gas refrigerant, and a third connection pipe (13) having a low-pressure gas refrigerant, and
the first refrigerant circuit (RC1) and the first auxiliary refrigerant circuit (RC2) are connected by the second connection pipe (12) and the third connection pipe (13) via the first switching valve (133).

2. The air conditioning system (100, 200) according to claim 1, further comprising:
a casing (150) accommodating the first auxiliary refrigerant circuit (RC2), the first supply fan (137), and the first exhaust fan (138), and provided with a supply air passage (151) for air passing the first auxiliary heat exchanger (131), and an exhaust air passage (152) for air passing the second auxiliary heat exchanger (132); and
a heat exchange unit (134) configured to cause heat exchange between the air in the supply air passage (151) before passing the first auxiliary heat exchanger (131) and the air in the exhaust air passage (152) before passing the second auxiliary heat exchanger (132).

3. The air conditioning system (100, 200) according to claim 1, wherein
the first heat recovery unit (130) includes a casing (150), and
the casing (150) accommodates the first auxiliary refrigerant circuit (RC2) and the first switching valve (133).

4. The air conditioning system (100, 200) according to any one of claims 1 to 3, wherein the refrigerant is a combustible refrigerant,
the air conditioning system further comprising shutoff valves (161, 162) provided between the first switching valve (133) and the second connection pipe (12), and between the first switching valve (133) and the third connection pipe (13).

5. The air conditioning system (200) according to any one of claims 1 to 4, wherein the third unit (120) is disposed in a second space (S12) different from the first space (S11),
the air conditioning system further comprising a second heat recovery unit (170) including:
a second auxiliary refrigerant circuit (RC5) including a third auxiliary heat exchanger (131), and a fourth auxiliary heat exchanger (132) connected in series to the third auxiliary heat exchanger (131) via a refrigerant pipe (135);
a second supply fan (137) configured to supply the second space (S 12) with outdoor air having passed the third auxiliary heat exchanger (131);
a second exhaust fan (138) configured to discharge, to outside (S2), air in the second space (S12) that having passed the fourth auxiliary heat exchanger (132);
and a second switching valve (133) configured to switch a refrigerant flow in the second auxiliary refrigerant circuit (RC5), wherein
the first refrigerant circuit (RC1) and the second auxiliary refrigerant circuit (RC5) are connected by the second connection pipe (12) and the third connection pipe (13) via the second switching valve (133).
